# EUROPEAN PATENT APPLICATION

(11) **EP 1 244 273 A2**
(43) Date of publication of application: **25.09.2002**
(21) Application number: 02400015.0
(22) Date of filing: 05.03.2002
(51) Int. Cl.: H04L 29/06

(54) **Biometric authenticated vlan**

(30) Priority: 08.03.2001 US 274113 P; 04.12.2001 US 11842
(71) Applicant: ALCATEL, 75008 Paris (FR)
(72) Inventor: Kuwata, Masateru, Tokyo 132-0034 (JP); Okamura, Koichiro, Tokyo 164-0001 (JP); Oasa, Taketoshi, Mitaka-shi, Tokyo 181-0003 (JP)
(74) Representative: Schäfer, Wolfgang

(57) **Abstract**

A user authentication system and method for a data communication network that helps ensure that a user accessing the network resources is indeed the person having a claimed identity. The user's identity is verified by a biometric system by examining the user's physiological or behavioral characteristic. User identification information needed for accessing the network resources is stored in the biometric system and not released until the user's identity is verified. Upon verification of the user's identity, the user identification data is provided to a switching node for determining the VLANs that the user may access.

## Description

### CROSS-REFERENCE TO RELATED APPLICATIONS

This application claims the benefit of provisional application No. 60/274,113, filed March 8, 2001, the content of which is incorporated herein by reference. This application further contains subject matter which is related to the subject matter disclosed in U.S. Patent Number 6,070,243, and subject matter disclosed in U.S. application No. 09/838,076 (attorney docket number 41625/JEC/X2), filed April 18, 2001, the contents of both of which are incorporated herein by reference.

### FIELD OF THE INVENTION

This invention relates generally to user authentication schemes for a communication network, and more particularly, to authenticating users of virtual local area networks based on physical characteristics associated with the users.

### BACKGROUND OF INVENTION

Virtual local area networks (VLANs) are logical subnetworks within a bridged LAN that differentiate service based on policies rather than physical location. Traditionally, VLAN membership is assigned to end-systems without reference to the identity of the users of such systems. For instance, VLAN membership is traditionally assigned by comparing network traffic with a configured set of rules which classify the traffic, and by inference the system that originated the traffic, into one or more VLANs.

In more recent technology, the identity of the user who sent the traffic is considered in the assignment process. Under this recent technology, a user of an end-system is given access to a personalized set of VLANs upon his or her authentication. Typically, the user of an end-station initiates an authentication session with a switching node to which the end-station is physically connected by transmitting the user's name and password. The end-station may include a personal computer, workstation, or the like. The switching node may include a switch, router, or the like.

The node searches for the user's name and password in one or more authentication servers until a match is found, and the user is allowed access into one or more authorized VLANs. If no match is found or if the user is not authorized at the time of the login attempt, the user is notified of an authentication failure and denied access except for further authentication attempts.

One problem with the described authentication scheme is that it simply authenticates or verifies a claimed identity, but does not seek to identify a user based on characteristics of the user. Thus, anyone having access to a valid user name and password may gain access to one or more VLANs even if the user is not the person he or she purports to be. Although precautions may be taken to maintain one's password secret, the user may inadvertently disclose it or select a password that may be easily guessed by others.

Accordingly, there is a need in the current art for a user authentication scheme for VLANs that also identifies a user according to characteristics that may be reliably be associated with the individual. The user authentication scheme should work with existing switching nodes and not require a revamping or restructuring of such nodes.

### SUMMARY OF THE INVENTION

According to one embodiment, the present invention is directed to a user authentication system for a communication network that includes a first node and a second node coupled to the first node. The second node receives a biometric sample from an individual, verifies the individual's identity based on the biometric sample, and upon verification of the individual's identity releases user identification information associated with the individual. The user identification information is transmitted to the first node for use in conducting an authentication protocol exchange with a third node.

According to another embodiment, the present invention is directed to a user authentication system for a communication network including a host accessible by an individual for accessing one or more VLANs, a biometric system receiving a biometric sample from the individual, and a switching node. The biometric system verifies the individual's identity based on the biometric sample and releases user identification information if the individual's identity is verified. The switching node receives the user identification information generated by the biometric system and permits the host access to one or more VLANs in accordance with the user identification information.

In a further embodiment, the present invention is directed to a user authentication system for a communication network that includes an input for receiving a biometric sample from an individual, a first engine coupled to the input for verifying the individual's identity based on the biometric sample, and a second engine coupled to the first engine for releasing user identification information if the individual's identity is verified by the first engine. The user identification information is used for determining one or more virtual local area networks to which the individual is authorized.

In another embodiment, the present invention is directed to a user authentication method for a communication system. The method includes the steps of receiving a biometric sample from an individual having access to a first node, comparing the biometric sample with stored biometric data, releasing user identification information in response to a match of the biometric sample with the stored biometric data, comparing the generated user identification information with stored user data, retrieving a list of authorized virtual local area networks (VLANs) in response to a match of the user identification information with the stored user data, and permitting the first node access to the authorized VLANs.

In a still further embodiment, the present invention is directed to a user authentication method for a communication system. The method includes the steps of receiving a biometric sample from an individual having access to a first node, verifying the individual's identity based on the biometric sample, and permitting the first node access to one or more virtual local area networks (VLANs) selected for the individual if the individual's identity is verified.

It should be appreciated, therefore, that the present invention helps ensure that users accessing the network resources are indeed the people having a claimed identity. By storing user identification information in a node that releases the information only upon verification of the user's identity, unauthorized use of the information is prevented.

### BRIEF DESCRIPTION OF THE DRAWINGS

These and other features, aspects and advantages of the present invention will be more fully understood when considered with respect to the following detailed description, appended claims, and accompanying drawings where:
FIG. 1 is a schematic block diagram of a biometric authenticated data communication network according to one embodiment of the invention;
FIG. 2 is a block diagram of a biometric system in the biometric authenticated data communication network of FIG. 1;
FIG. 3 is a schematic block diagram of a host in the biometric authenticated data communication network of FIG. 1;
FIG. 4 is a block diagram of a switching node in the biometric authenticated data communication network of FIG. 1;
FIG. 5 is a schematic block diagram of a network server in the biometric authenticated data communication network of FIG. 1;
FIG. 6 is a functional diagram of an authentication agent according to one embodiment of the invention;
FIG. 7 is a functional diagram of an authentication server according to one embodiment of the invention;
FIG. 8 is a functional diagram of a biometric client according to one embodiment of the invention;
FIG. 9 is a functional diagram of an authentication client according to one embodiment of the invention; and
FIG. 10 is a flow diagram of a process for a biometric authenticated VLAN according to one embodiment of the invention.

### DETAILED DESCRIPTION OF THE SPECIFIC EMBODIMENTS

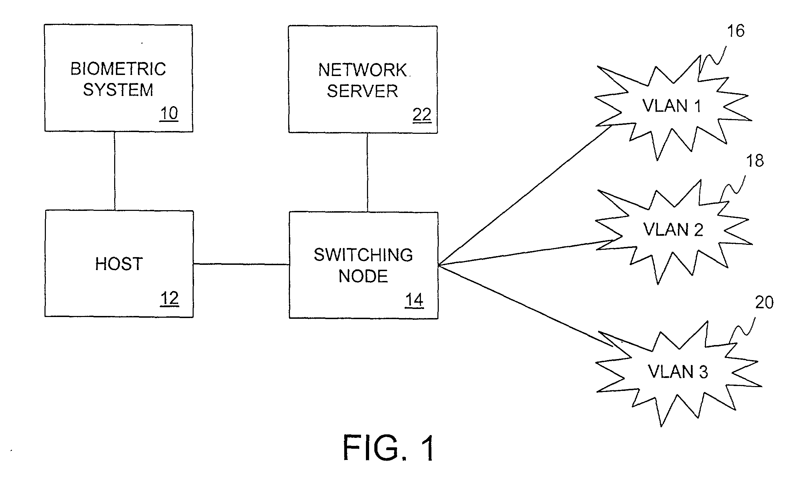

FIG. 1 is a schematic block diagram of a biometric authenticated data communication network according to one embodiment of the invention. The network includes a biometric system 10 coupled to a host 12 over a communication link, such as, for example, a universal serial bus (USB). A switching node 14 is coupled to the host 12 and to a network server 22. The switching node 14 communicates with the host 12 and the network server 22 over a public internet, private intranet, and/or other like connection known in the art.

The biometric system 10 preferably includes circuitry and/or logic for receiving a biometric sample from an individual and verifying his or her identity based on the sample. The biometric sample is preferably a physiological or behavioral characteristic of the individual that is used for verifying his or her identity. Such biometric samples may include fingerprints, voice patterns, iris and/or retinal patterns, hand geometries, signature verifications, keystroke analyses, and/or other characteristics that are irrevocably tied to the individuals and cannot be realistically transferred.

The host 12 is preferably an end-device such as, for example, a personal computer, workstation, server, or the like, with interfaces to the biometric system 10 and the switching node 14. The switching node 14 is preferably a gateway device such as, for example, a hub, bridge, or router for forwarding packetized communications originated by the host to authorized VLANs 16, 18, 20. The network server 22 is a RADIUS, LDAP (Lightweight Directory Access Protocol), and/or COPS (Common Open Policy Service) server for authenticating a user of the host 12 to one or more VLANs 16, 18, 20. In another embodiment of the invention, the communication network may include multiple network servers each associated with a particular VLAN 16, 18, 20, as described in further detail in U.S. application No. 09,838,076.

The host 12, switching node 14, network server 22, and VLANs 16, 18, 20 may be interconnected via cables or other transmission media, and may support various data communication protocols, such as Ethernet, Internet Protocol, and/or Asynchronous Transfer Mode (ATM).

In general terms, a user desiring to access a particular network resource, such as, for example, a particular VLAN, presents his or her biometric sample to the biometric system 10. According to one embodiment of the invention, the biometric system 10 transmits the received biometric sample to the host 12 for verifying the user's identity. In another embodiment of the invention, the verification process is carried out by the biometric device itself. In a further embodiment of the invention, the verification process occurs in a separate server (not shown) connected via a default VLAN.

If the user's identity is verified, the biometric system 10 releases identification information for the user, such as, for instance, a user name, password, PIN, token, and/or the like, needed to access the network. The user identification information is preferably transmitted to the host 12 which in turn uses the information in conducting an authentication protocol exchange with the switching node 14 for authenticating the user into one or more VLANs 16, 18, 20.

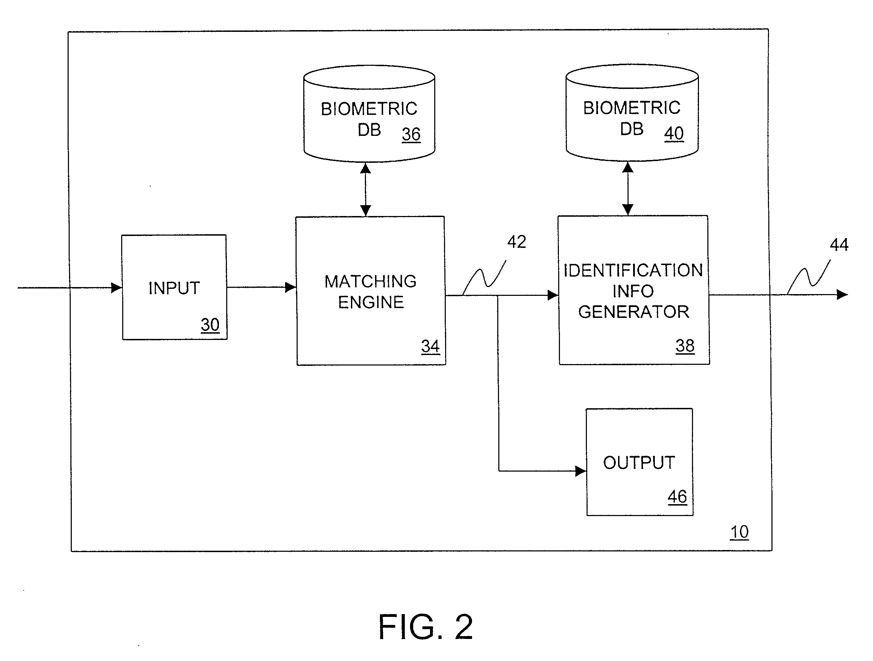

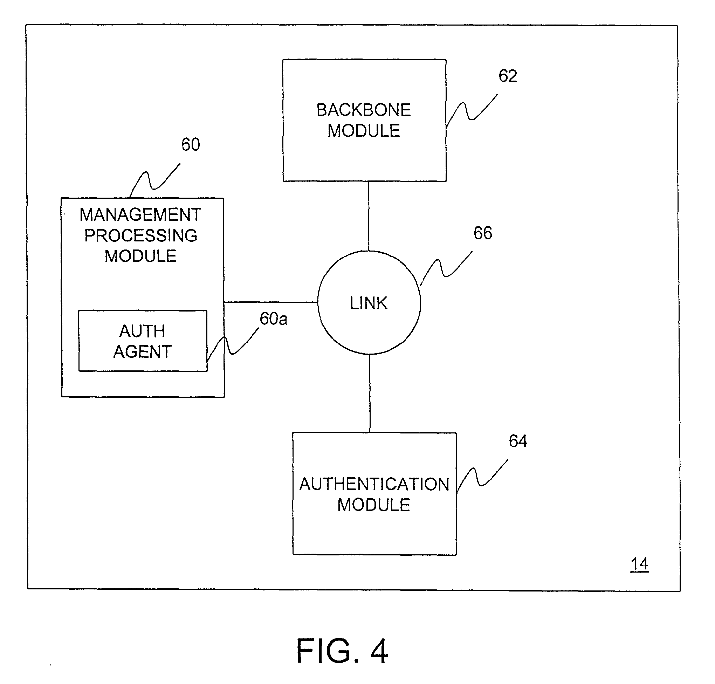

FIG. 2 is a block diagram of the biometric system 10 according to one embodiment of the invention. It is understood, of course, that FIG. 2 illustrates a block diagram of the biometric system 10 without obfuscating inventive aspects of the present invention with additional elements and/or components which may be required for creating the system. These additional elements and/or components, which are not shown in FIG. 2 are well known to those skilled in the art.

The biometric system 10 preferably includes an input 30, a matching engine 34, an identification information generator 38, a biometric database 36, an identification information database 40, and an output 46. The input 30 may be a scanner, camera, telephone, microphone, keyboard, keypad, or another device used for receiving a biometric sample from a user.

The matching engine 34 and identification information generator 38 are software, hardware, and/or firmware, such as, for example, application specific integrated circuit (ASIC), modules for respectively verifying a user's identity and releasing identification information for the user if the user is verified. The matching engine 34 receives a biometric sample provided by the input 30 and searches a biometric database 36 for a match of the entered biometric sample.

The biometric database 36 preferably includes a biometric template for each user enrolled in the biometric system 10. Preferably, the biometric template is a mathematical representation of the user's biometric data. In an alternative embodiment, the biometric database 36 may be replaced with portable tokens, such as, for example, smart cards, permitting users to maintain ownership of their biometric data at all times.

The matching engine 34 compares an entered biometric sample with the biometric templates in the biometric database 36 and produces a result 42 to the identification information generator indicating whether the user's identity has been verified. All or portions of the result are preferably further displayed by the output 46 taking the form of a monitor, LCD display, or another display device. In one embodiment of the invention, all or portions of the result are transmitted to the host 12 for display thereon.

The identification information generator retrieves the user's identification information from an identification information database 40 if the user's identity is verified. The identification information database 40 preferably provides a central storage of user identification information for the registered users of the system. The identification information database 40 preferably associates a user identification information such as, for example, a user name, password, PIN, token, and/or the like, to each biometric template in the biometric database 36. The appropriate user identification information is retrieved upon a match of a biometric template to the entered biometric sample. The retrieved user identification information is transmitted as output data 44 to the host 12.

A person skilled in the art should recognize that although the input 30, matching engine 34, biometric database 36, identification information generator 38, identification information database 40, and output 46 are illustrated to reside in a single biometric system 10, any one or combination of these components may be operative in one or more other devices in the communication network. For example, the matching engine 34 and/or identification information generator 38 may reside in the host 12 or in a separate back-end server coupled to a default VLAN.

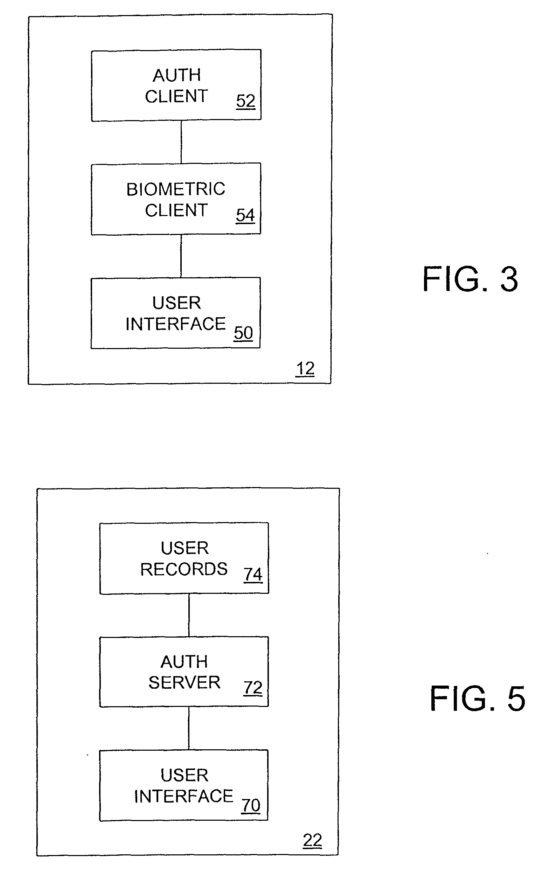

FIG. 3 is a schematic block diagram of the host 12 according to one embodiment of the invention. The host 12 preferably includes a user interface 50, a biometric client 54, and an authentication client 52. The user interface 50 preferably includes an input and output such as, for example, a keyboard, keypad, display screen, mouse, joystick, trackball, and/or the like.

The biometric client 54 is preferably a software module application used for communicating with the biometric system 10. Preferably, the biometric client 54 is automatically invoked upon booting-up of the host 12 by a user. The biometric client detects the biometric system 10 and engages the system in verification of the user's identity. Alternatively, the biometric client is invoked only upon a direct action of the user.

The authentication client 52 is preferably a software module application used for engaging in an authentication process with the switching node 14 if the user's identity is verified. The software module may take the form of a software application installed on the host 12 but may also take the form of a standard software application such as Telnet, XCAP (Xylan Client Authentication Protocol), or a web-based application. The authentication client 52 is preferably configured with an address of the switching node 14. The address may be an IP address or a reserved media access control (MAC) address.

FIG. 4 is a block diagram of the switching node 14 according to one embodiment of the invention. The switching node 14 preferably includes a management processor module 60, backbone module 62, and authentication module 64 interconnected over a switching link 66. The backbone and authentication modules 62, 64 are preferably implemented using firmware, such as, for example, ASICs. The management processor module 60 is preferably implemented as a software module running on a processor of the switching node 14.

The management processor module 60 preferably includes an authentication agent 60a for receiving user identification information from the host 12 and authenticating the user to a particular VLAN. The backbone module 62 preferably receives and forwards packets via a backbone network. The authentication module 64 preferably includes a LAN interface interconnecting the host 12 and the switching link 66. The authentication module 64 preferably also includes logic for interpreting, modifying, filtering, and forwarding packets. The authentication module 64 may also operate to perform necessary LAN media translations so that the switching node 14 may support hosts operating using disparate LAN media.

FIG. 5 is a schematic block diagram of the network server 22 according to one embodiment of the invention. The network server 22 preferably includes a user interface 70, a software-implemented authentication server 72, and user records 74. The user interface 70 preferably includes an input and output such as, for example, a keyboard, keypad, display screen, mouse, joystick, and/or the like.

The user records 74 preferably include user-specific entries including user identification information and a list of authorized network resources. The user-specific entries may also include time restrictions and/or other restrictions for the particular user.

The authentication server 72 communicates with the authentication agent 60a for authenticating a user. The authentication server is preferably further configured with an address of the switching node 14 and an authentication key for the authentication agent 60a on the node. The address is preferably an IP address.

Although the authentication server 72 and user records 74 are shown operative on the network server 22, the authentication server 72 and/or user records 74 may be operative on another device in the network accessible by the network server 22. Furthermore, although the network server 22 is illustrated to include a single authentication server 72, a network operating in accordance with the present invention may include one or more authentication servers.

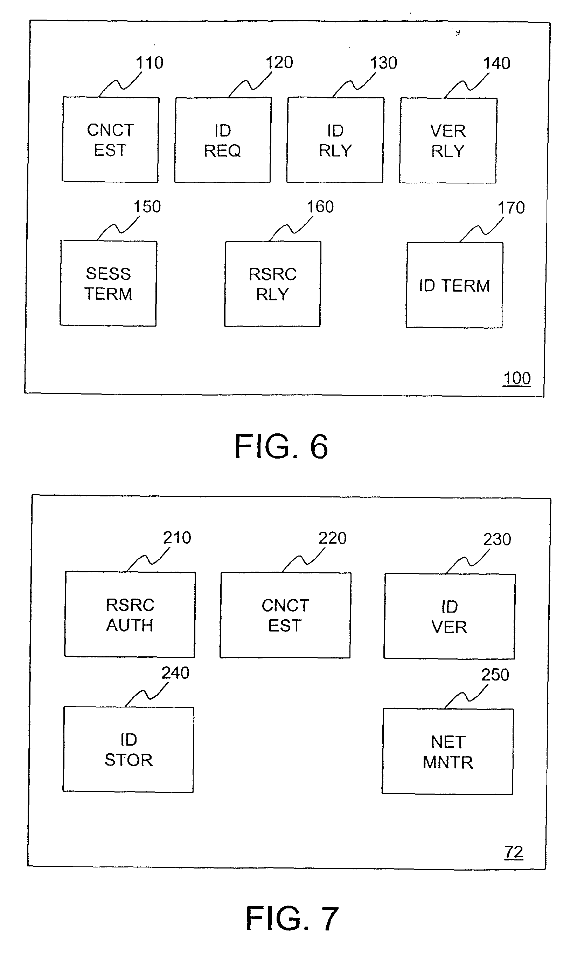

FIG. 6 is a functional diagram of an authentication agent 100 deployed on the switching node 14 according to one embodiment of the invention. The authentication agent 100 is preferably a software module similar to the authentication agent 60a implemented by the management processor module 60. The authentication agent 100 is preferably configured with an address of the switching node 14 and an address of the authentication server 72. The configured addresses are preferably an IP addresses. The authentication agent may also be configured with an authentication key for the server.

The authentication agent 100 preferably includes a connection establishment module 110 for establishing a secure connection with the authentication server 72. In this regard, the connection establishment module 110 requests a connection to the authentication server 72 using the known address of server, and acknowledges a response from the server to such a request. The connection establishment module 110 also transmits and receives information from and to the authentication server 72 sufficient to allow the authentication agent 100 and server 72 to authenticate one another. Preferably, mutual authentication is accomplished through exchange of authentication keys configured on the authentication agent 100 and server 72.

The connection establishment module 110 may encrypt information and decipher encrypted information transmitted during the secure connection establishment process. TCP/IP based flows between the authentication agent 100 and server 72 are contemplated. If multiple authentication servers exist, the authentication agent 100 is preferably configured with the address and authentication key of each authentication server. If an attempt to establish a secure connection with a particular server fails, the authentication agent 100 may implement the foregoing process using the known address of another authentication server until a secure connection is established.

The authentication agent 100 preferably also includes an identification (ID) request module 120. The ID request module 120 serves to obtain identification information from the authentication client 52 operative in the host 12. The ID request module 120 further serves to acknowledge a request received from the authentication client 52 to establish an authentication session. IP-based flows using a software application such as, for example Telnet or XCAP, or MAC-based flows between the authentication agent 100 and client 52 are contemplated. Preferably, the flows are initiated by the authentication client 52 using a reserved MAC address or IP address of the authentication agent 100 configured on the client.

The authentication agent 100 preferably also includes an ID relay module 130 for relaying to the authentication server 72 a request to authenticate the user identification information. The ID relay module 130 preferably associates the known address of the switching node 14, the identifier of the authentication module 64 associated with the host 12 used by the user for authentication, and the login identification information. The ID relay module 130 preferably transmits the associated identification information to the authentication server 72 for authentication.

In addition to the above, the authentication agent 100 also includes a verification relay module 140 for forwarding user status information received from the authentication server 72 based on the identification information. The user status information preferably includes a login valid or login invalid message, depending on whether the authentication server 72 was able to successfully authenticate the identification information. The verification relay module 140 preferably transmits the user status information to the host 12 for display on the user interface 50. IP-based flows using a software application such as, for example Telnet or XCAP, or MAC-based flows between the authentication agent 100 and client 52 are contemplated.

The authentication agent 100 preferably further includes a session termination module 150 for terminating an authentication session if a user has failed to be authenticated. The session termination module 150 preferably transmits to the authentication client 52 an authentication session termination message upon a login failure. The session termination module 150 further terminates the authentication session with the authentication client 52.

The authentication agent 100 also includes a resource relay module 160 for forwarding for storage and use on the switching node 14 authorized connectivity information received from the authentication server 72 for an authenticated user of the host 12. Authorized connectivity information may advantageously be transmitted by the authentication server 72 to the authentication agent 100 in the same data packet as user status information. Authorized connectivity information preferably includes a list of authorized network resources for the user. The list of authorized network resources is preferably a list of one or more VLAN identifiers.

Authorized connectivity information may also include time restrictions preferably defining times during which the user is authorized to use the authorized network resources, such as the day of the week, the time of day, and the length of permitted access. Other restrictions that are conventional in the art may also be placed on the authorized user.

Authorized connectivity information is preferably forwarded by the authorization agent 100 to the management processor module 60 along with the corresponding authentication module 64 identifier. The management processor module 60 preferably associates the authorized connectivity information with the known address of the host 12 being used by the authenticated user, and stores the pair in a device record. The address is preferably a MAC address.

Device records are preferably used on the switching node 14 to make filtering and forwarding decisions on packets received from and destined for the user. If the host 12 is unauthenticated, packets transmitted by the host is preferably dropped by the receiving authentication module 64, unless addressed to the authentication agent 100. If the host 12 is authenticated, packets transmitted by the authenticated host to another authenticated host are selectively forwarded according to the following rules:
1. If the destination address is the address of another host associated with the switching node 14, resort is made to device records on the node to verify that the source and destination hosts share a common VLAN. If a VLAN is shared, the packet is forwarded to the destination host. If a VLAN is not shared, the packet is dropped.
2. If the destination address is not the address of another host associated with the switching node 14, resort is made to device records on the node to retrieve the VLAN identifier associated with the source host. The VLAN identifier is preferably appended to the packet and the packet is transmitted by the backbone module 62. When the packet arrives on the switching node associated with the destination host, resort is made to device records on the switching node to verify that the source and destination hosts share a common VLAN. If a VLAN is shared, the packet is forwarded to the destination host. If a VLAN is not shared, the packet is dropped.

Packets addressed to unauthenticated hosts in the network continue to be dropped. The foregoing rules may be implemented using various protocols known in the art. It will be appreciated that any addressable core, edge, or end devices, stations and hosts in the network which are not subject to authentication requirements may be treated as authenticated systems for purposes of transmitting and receiving packets under the foregoing rules.

The authentication agent 100 also includes an ID termination module 170 for reverting the host 12 to an unauthenticated state from an authenticated state. This preferably either occurs upon receipt of a log-off command from the authenticated user, expiration of the authorized communicability period, physical disconnection of the authenticated host 12 from the network, failure by the authenticated host 12 to send traffic for a prescribed length of time, and/or receipt of an instruction from the authentication server 72 to deactivate the established network communicability. The ID termination module 170 preferably forwards to the management processor module 60 a request to remove from the device record the address-authorized communicability information entry for the user whose communicability is to be deactivated. Upon receipt of such a request, the management processor module 60 preferably removes the requested entry from the device record and the authenticated host 12 preferably reverts to the unauthenticated state.

The connection establishment, ID request, ID relay, verification relay, session termination, resource relay, and ID termination modules 110-170 are preferably software modules. A person skilled in the art should recognize, however, that these modules may be designed as a combination of hardware, firmware, and/or software. A person skilled in the art should also recognize that the authentication agent 100 may include other modules that are not disclosed but are conventional in the art.

FIG. 7 is a functional diagram of the authentication server 72 according to one embodiment of the invention. The authentication server 72 includes a resource authorization module 210 preferably allowing a network administrator to enter user-specific entries for the authorized users of the communication network. The resource authorization module 210 preferably supplies a textual and/or graphical display to the user interface 70 operative to accept the user-specific entries. The resource authorization module 210 preferably stores each user-specific entry as a related pair in the user records 74. Each user-specific entry preferably includes a user identifier and user identification information, such as, for example, a password, of a user authorized to access the VLAN 16, 18 or 20. The user-specific entries may also include restriction information such as, for example, time restrictions, for the authorized users.

The resource authorization module 210 further allows the network administrator to input device-specific entries. The device-specific entries preferably include, for each switching node in the network having an authentication agent, the address of the switching node 14 and an authentication key for the authentication agent 100 active on the node. The address is preferably an IP address uniquely assigned to the switching node.

The authentication server 72 preferably also includes a connection establishment module 220. The connection establishment module 220 establishes a secure connection with the authentication agent 100 upon receipt of a request from the agent. The connection establishment module 220 acknowledges receipt of the request and proceeds to respond to the request. The connection establishment module 220 also transmits and receives information sufficient to allow the authentication agent 100 and authentication server 72 to authenticate one another. Preferably, authentication is established through an exchange of authentication keys. The connection establishment module 220 may encrypt information and decipher encrypted information transmitted during the secure connection establishment process. TCP/IP based flows between the authentication agent 100 and server 22 are contemplated.

The authentication server 72 preferably also includes an ID verification module 230. The ID verification module 230 serves to subject to an authentication process, the user identification information received from the user via the authentication agent 100. Upon receipt of the user identification information from the agent 100, the ID verification module 230 determines if the information matches the information associated with a user-specific entry in the user records 74. If a match is found, and there are other restrictions associated with the user-specific entry, the ID verification module 230 determines from the restriction information if the user is authorized to access one or more VLANs.

If the user is authorized despite the restrictions, or there are no restrictions, the ID verification module 230 preferably generates authorized connectivity information. In this regard, the ID verification module 230 retrieves the list of authorized network resources associated with the matching user identification information from the user records 74. Authorized connectivity information may also include any time restrictions.

The ID verification module 230 further generates user status information. The user status information is preferably either a login valid or login invalid message. The ID verification module 230 preferably transmits the user status information along with any time restriction information to the authentication agent 100.

If the ID verification module 230 does not find a match for the user identification information in the user records 74, or if the user is not time-authorized, the ID verification module generates and transmits to the authentication agent 100 user status information, preferably in the form of a login invalid message.

The authentication server 72 preferably also includes an ID storage module 240. The ID storage module 240 preferably serves to forward user tracking information for storage and use by a network administrator. The user tracking information is preferably retained for all login attempts made by prospective users, whether successful or unsuccessful. The user tracking information may include, for each login attempt, any information learned from one or more of the following: user identification information, authentication information, user status information, restriction information, and/or the like.

The user tracking information may also include the time of day the login attempt was made. The time of day may be kept on and obtained from the authentication server 72. The user tracking information may also include logoffs, number of packets sent/received, MAC address of the host 12, and the like. The authentication server 72 preferably associates the user tracking information and stores the information as an entry in a network activity database (not shown) that is accessible by or resides on the network server 22. The network activity database entries are accessible by a network administrator via the user interface 70.

In addition to the above, the authentication server 72 preferably also includes a network monitor module 250. The network monitor module 250 preferably serves to enable a network administrator to access and use the user tracking information created by the ID storage module 240. The network monitor module 250 supplies a textual and/or graphical display to the user interface 70 operative to display the user tracking information. The network monitor module 250 also enables a network administrator to generate user tracking information reports consisting of related information from one or more user tracking information entries.

The resource authorization, connection establishment, ID verification, ID storage, and network monitor modules 210-250 are preferably software modules. A person skilled in the art should recognize, however, that these modules may also be designed as a combination of hardware, firmware, and/or software. A person skilled in the art should also recognize that the authentication server 72 may include other modules that are not disclosed but are conventional in the art.

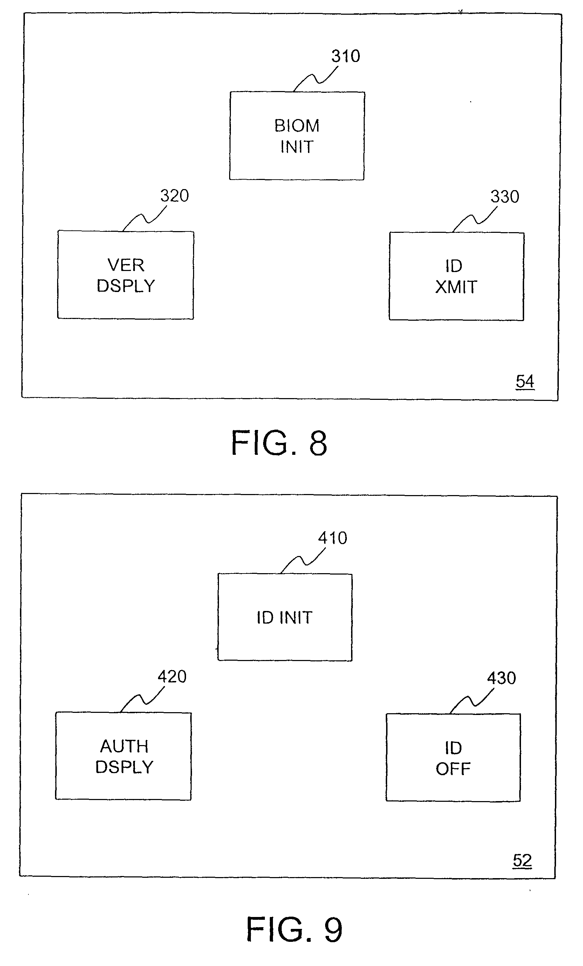

FIG. 8 is a functional diagram of the biometric client 54 residing in the host 12 according to one embodiment of the invention. The biometric client 54 preferably includes a biometric initialization module 310, verification display module 320, and ID transmit module 330. These modules are preferably software modules. A person skilled in the art should recognize, however, that these modules may also be designed as a combination of hardware, firmware, and/or software. A person skilled in the art should also recognize that the biometric client 54 may include other modules that are not disclosed but are conventional in the art.

The biometric initialization module 310 requests and establishes a biometric verification session with the biometric system 10 preferably upon boot-up of the host 12. Alternatively, the biometric initialization module 310 may be activated by a direct action of the user. The biometric initialization module 310 preferably transmits to the biometric system 10 a request to establish a biometric verification session via the USB. The biometric initialization module 310 preferably transmits requests periodically until the biometric system 10 responds and engages in verification of the user's identity.

The verification display module 320 preferably supplies a textual and/or graphical display to the user interface 50 of the results of the biometric verification process. Such results may indicate whether the user's identity has been verified. The results may also include a score indicating a percentage of the match between the provided biometric sample and a stored biometric template.

The ID transmit module 330 preferably receives user identification information from the biometric system 10 if the user's identity has been verified. The ID transmit module 330 preferably transmits the identification information to the authentication client 52 for authenticating the user into one or more VLANs 16, 18, 20.

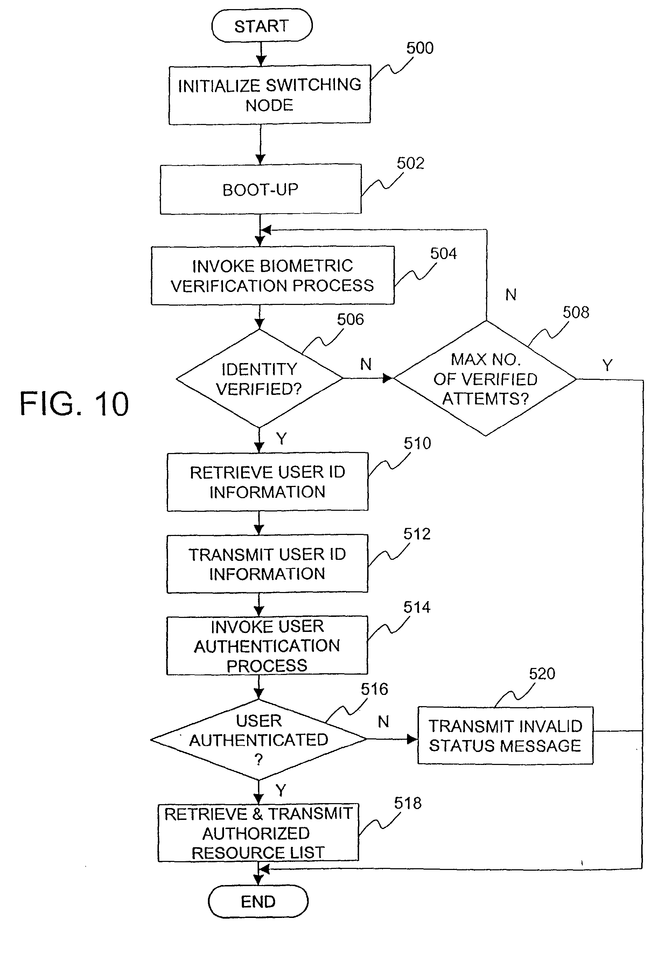

FIG. 9 is a functional diagram of the authentication client 52 residing in the host 12 according to one embodiment of the invention. The authentication client 52 preferably includes an ID initialization module 410, a verification display module 420, and an ID off module 430. These modules are preferably software modules. A person skilled in the art should recognize, however, that these modules may also be designed as a combination of hardware, firmware, and/or software. A person skilled in the art should also recognize that the authentication client 52 may include other modules that are not disclosed but are conventional in the art.

The ID initialization module 410 requests and establishes an authentication session with the authentication agent 100 upon receipt of user identification information from the biometric client 54. The ID initialization module 410 preferably transmits to the authentication agent 100 a request to establish an authentication session using a known address of the agent. The authentication client 54 preferably transmits requests periodically until the authentication agent 100 responds. A MAC-based flow is contemplated. Alternatively, an IP-based flow may be used via a software application such as, for example, Telnet or XCAP.

The verification display module 430 conveys to the user of the host 12 whether the login attempt was successful or unsuccessful. The verification display module 430 supplies a textual and/or graphical display to the user interface 50 operative to display user status information, preferably a login valid message or a login invalid message, received from the authentication agent 100 in the switching node 14.

The ID off module 440 initiates the log-off process by which authenticated users log-off the network. The ID off module 440 preferably supplies a textual and/or graphical display to the user interface 50 operative to accept log-off commands. The ID off module 440 preferably transmits the log-off commands to the authentication agent 100 for deactivation of established network communicability.

FIG. 10 is a flow diagram of a process for a biometric authenticated VLAN according to one embodiment of the invention. The process starts, and in step 500, the switching node 14 is initialized. Upon initialization, the authentication agent 100 attempts to establish a secure connection with the authentication server 72 using the known address of the server. Once a TCP session is successfully established, agent 100 and server 72 authenticate one another by exchanging authentication keys.

In step 502, a user boots-up the host 12, preferably causing activation of the biometric client 54. The biometric client 54 detects the biometric system 10 coupled to the host 12, and transmits a request for a biometric verification process in step 504. In this regard, the user, either automatically or in response to a prompt by the host 12 or biometric system 10, provides a biometric sample to the biometric system. The matching engine 34 compares the biometric sample against templates stored in the biometric database 36, and outputs a result indicating whether the user's identity has been verified. If the identity has been verified, as determined in step 506, the identification information generator 38, in step 510, provides to the biometric client 54 user identification information associated with the matched template.

In step 512, the biometric client 54 provides the user identification information to the authentication client 52. In step 514, a user authentication process is invoked based on the user identification information. In this regard, the authentication client 52 transmits an authentication request to the authentication agent 100 residing in the switching node 14. The request preferably includes the user identification information provided by the biometric client 54. Authentication requests are transmitted to the agent 100 periodically until the agent responds.

The authentication agent 100 receives the request and transmits to the authentication server 72 the user identification information along with an address of the switching node 14 and an identifier of the authentication module 64 associated with the host 12. The authentication server 72 searches the user records 74 for a user-specific entry having information that matches the user identification information. If a matching entry is found, the authentication server 72 checks for any time restrictions. If the user is time-authorized, as determined in step 516, the authentication server 72 retrieves the list of authorized network resources and any time restrictions, and transmits the information to the authentication client 52 along with user status information. The user status information is preferably a log-in valid message.

If no matching entry is found, or if the user is not time authorized, a user status information, preferably in the form a log-in invalid message, is returned to the authentication client 52 in step 520.

Referring again to step 506, if the user's identity is not verified based on the provided biometric sample, a determination is made in step 508 whether a maximum number of verification attempts have been made. If the answer is NO, the biometric client 52 preferably invokes the biometric verification process again based on a newly provided biometric sample.

Although this invention has been described in certain specific embodiments, those skilled in the art will have no difficulty devising variations which in no way depart from the scope and spirit of the present invention. For example, although the present invention is described with respect to specific software modules associated with particular biometric verification or authentication tasks, a person skilled in the art should recognize that any of the tasks may be combined into a particular module or delegated to separate modules. It is therefore to be understood that this invention may be practiced otherwise than is specifically described. Thus, the present embodiments of the invention should be considered in all respects as illustrative and not restrictive, the scope of the invention to be indicated by the appended claims and their equivalents rather than the foregoing description.

## Claims

1. A user authentication system for a communication network comprising:
a first node; and
a second node coupled to the first node, **characterized in that** the second node receives a biometric sample from an individual, verifies the individual's identity based on the biometric sample, and upon verification of the individual's identity releases user identification information associated with the individual, the user identification information being transmitted to the first node for use in conducting an authentication protocol exchange with a third node.

2. The user authentication system of claim 1 further **characterized in that** the third node permits the first node access to one or more virtual local area networks (VLANs) based on the user identification information.

3. The user authentication system of claim 2 further **characterized in that** the third node denies the first node access to the one or more VLANs if access is sought outside a defined access period.

4. The user authentication system of claim 1, wherein the biometric sample is a physiological characteristic of the individual.

5. The user authentication system of claim 1, wherein the user identification information includes a user name and password.

6. A user authentication system for a communication network comprising:
a host accessible by an individual for accessing one or more virtual local area networks (VLANs) ;
a biometric system receiving a biometric sample from the individual, the biometric system verifying the individual's identity based on the biometric sample and releasing user identification information if the individual's identity is verified; and
a switching node receiving the user identification information generated by the biometric system and permitting the host access to one or more VLANs in accordance with the user identification information.

7. The user authentication system of claim 6, wherein the biometric sample is a physiological characteristic of the individual.

8. The user authentication system of claim 6, wherein the user identification information includes a user name and password.

9. The user authentication system of claim 6 further including an authentication server coupled to the switching node, the authentication server comparing the user identification information with stored user data and retrieving a list of authorized VLANs upon a match.

10. The user authentication system of claim 6, wherein the host is denied access to the one or more VLANs if access is sought outside a defined access period.

11. A user authentication system for a communication network comprising:
an input for receiving a biometric sample from an individual;
a first engine coupled to the input for verifying the individual's identity based on the biometric sample; and
a second engine coupled to the first engine for releasing user identification information if the individual's identity is verified by the first engine, the user identification information being used for determining one or more virtual local area networks to which the individual is authorized.

12. The user authentication system of claim 11, wherein the first engine compares the biometric sample with stored biometric data and returns a result based on the comparison.

13. The user authentication system of claim 12 further comprising an output for displaying the result.

14. The user authentication system of claim 11, wherein the biometric sample is a physiological characteristic of the individual.

15. The user authentication system of claim 11, wherein the user identification information includes a user name and password.

16. A user authentication method for a communication system, the method including the steps of:
receiving a biometric sample from an individual having access to a first node;
verifying the individual's identity based on the biometric sample;
releasing user identification information if the individual's identity is verified; and
conducting an authentication protocol exchange including transmission of the generated user identification information to a second node.

17. The user authentication method of claim 16 further comprising the step of permitting the first node access to one or more virtual local area networks (VLANs) based on the user identification information.

18. The user authentication method of claim 17 further comprising the step of denying the first node access to the one or more VLANs if access is sought outside a defined access period.

19. The user authentication method of claim 16, wherein the biometric sample is a physiological characteristic of the individual.

20. The user authentication method of claim 16, wherein the user identification information includes a user name and password.

21. A user authentication method for a communication system, the method comprising the steps of:
receiving a biometric sample from an individual having access to a first node;
comparing the biometric sample with stored biometric data;
releasing user identification information in response to a match of the biometric sample with the stored biometric data;
comparing the generated user identification information with stored user data;
retrieving a list of authorized virtual local area networks (VLANs) in response to a match of the user identification information with the stored user data; and
permitting the first node access to the authorized VLANs.

22. The user authentication method of claim 20, wherein the biometric sample is a physiological characteristic of the individual.

23. The user authentication method of claim 20, wherein the user identification information includes a user name and password.

24. The user authentication method of claim 20 further comprising the step of denying access to the one or more VLANs if access is sought outside a defined access period.

25. A user authentication method for a communication system, the method comprising the steps of:
receiving a biometric sample from an individual having access to a first node;
verifying the individual's identity based on the biometric sample; and
permitting the first node access to one or more virtual local area networks (VLANs) selected for the individual if the individual's identity is verified.

26. The user authentication method of claim 25, wherein the biometric sample is a physiological characteristic of the individual.

27. The user authentication method of claim 25 further comprising the step of denying access to the one or more VLANs if access is sought outside a defined access period.
